# EUROPÄISCHE PATENTSCHRIFT

(11) **EP 1 876 468 B1**
(45) Veröffentlichungstag und Bekanntmachung des Hinweises auf die Patenterteilung: **18.11.2009**
(21) Anmeldenummer: 06013853.4
(22) Anmeldetag: 04.07.2006
(51) Int. Cl.: G01S 7/497, G01S 17/10, G01S 7/486

(54) **Vorrichtung und Verfahren zur optoelektronischen berührungslosen Distanzmessung**
Method and apparatus for optoelectronic contactless distance measuring
Dispositif et procédé destinés à la mesure de distance optoélectronique sans contact

(43) Veröffentlichungstag der Anmeldung: 09.01.2008
(73) Patentinhaber: Pepperl + Fuchs GmbH, 68307 Mannheim (DE)
(72) Erfinder: Satzky, Uwe, 22455 Hamburg (DE); Tabel, Ernst, 22337 Hamburg (DE)
(74) Vertreter: Schiffer, Axel Martin

(56) Entgegenhaltungen:
- EP-A2- 0 933 649
- DE-A1- 10 249 285
- DE-A1- 19 703 633
- DE-A1- 19 704 340
- DE-C1- 19 830 684
- US-A1- 2005 119 846

## Beschreibung

Die vorliegende Erfindung betrifft in einem ersten Aspekt eine Vorrichtung zur optoelektronischen berührungslosen Distanzmessung nach dem Laufzeitprinzip nach dem Oberbegriff des Anspruchs 1.

In einem weiteren Aspekt bezieht sich die Erfindung auf ein Verfahren zur optoelektronischen berührungslosen Distanzmessung nach dem Oberbegriff des Anspruchs 8.

Eine gattungsgemäße Vorrichtung und ein gattungsgemäßes Verfahren sind in DE 102 49 285 A1 beschrieben.

Eine gattungsgemäße Vorrichtung weist folgende Komponenten auf: Eine Sensoreinheit mit mindestens einer Lichtquelle zum Aussenden von Lichtpulsen, mit einem Detektor zum Nachweis von Lichtpulsen, mit einer Einrichtung zum Aufteilen der Lichtpulse in jeweils einen Messpuls und einen Referenzpuls, mit einer Messoptik zum Leiten der Messpulse auf ein Objekt, dessen Entfernung zur Sensoreinheit bestimmt werden soll, und zum Leiten von von dem Objekt reflektierten Messpulsen als Echopulse auf den Detektor sowie eine Referenzoptik zum Leiten der Referenzpulse in Richtung des Detektors, wobei die Entfernung des Objekts von der Sensoreinheit bestimmbar ist aus einer Zeitdifferenz aus einem Startsignal und einem aus einem Echopuls abgeleiteten Echosignal.

Bei einem gattungsgemäßen Verfahren sendet eine Lichtquelle einer Sensoreinheit Lichtpulse aus. Die Lichtpulse werden jeweils in einen Messpuls und in einen Referenzpuls aufgeteilt, die Messpulse werden über eine Messoptik auf ein Objekt, dessen Entfernung zur Sensoreinheit gemessen werden soll, geleitet, von dem Objekt reflektierte Messpulse werden über die Messoptik als Echopulse auf einen Detektor geleitet und von diesem nachgewiesen und die Referenzpulse werden über eine Referenzstrecke auf denselben Detektor geleitet und von diesem nachgewiesen, wobei aus den Zeitpunkten, zu denen die Echopulse von dem Detektor nachgewiesen werden und einem Startsignal die Entfernung des Objekts zur Sensoreinheit bestimmt wird.

Solche Sensoren und Verfahren werden zum Beispiel in der Lager- und Fördertechnik zur Positionierung von Regalbediengeräten, aber auch für eine Vielzahl anderer Anwendungen im Bereich der industriellen Automatisierung eingesetzt.

Optoelektronische Sensoren zur berührungslosen Distanzmessung werden je nach genutztem Verfahren in verschiedene Kategorien eingeteilt.

Eine erste Möglichkeit, Entfernungen sehr präzise zu messen, besteht darin, die Phasenlage von ausgesandter und empfangener Welle zu messen. Bei diesem Verfahren werden von einer Laserdiode Sinuswellen ausgesendet. Durch den Vergleich der Phasenlage der ausgesendeten Welle mit der Phasenlage der empfangenen Welle kann die Entfernung bestimmt werden.

Im Unterschied dazu werden bei Pulslaufzeitverfahren von einer Lichtquelle kurze Pulse ausgesendet. Durch die Messung der Laufzeit zwischen dem Aussenden des Pulses und dem Nachweis des reflektierten Lichts kann die Entfernung des reflektierenden Objekts bestimmt werden. Auf dieses Verfahren bezieht sich die vorliegende Erfindung.

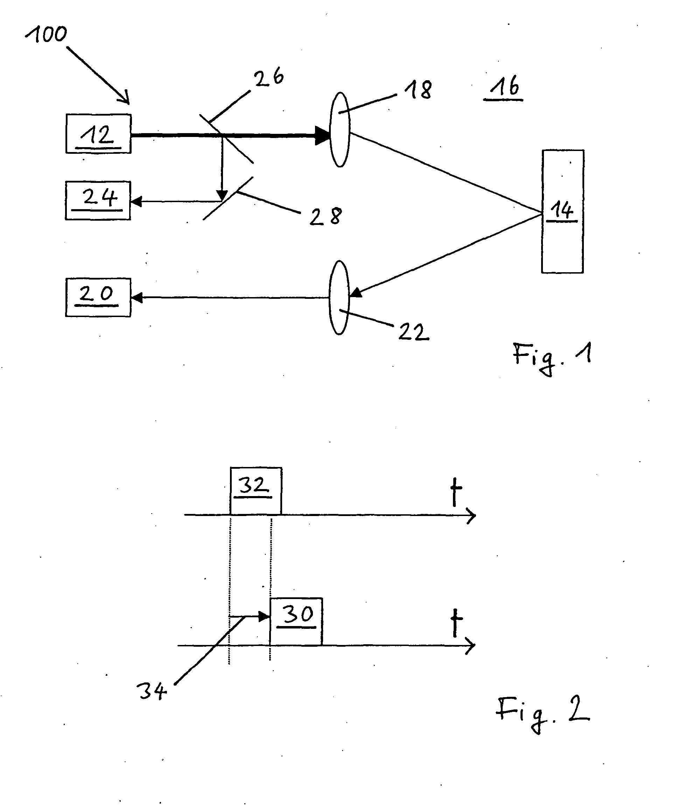

Ein Startsignal für die Zeitmessung kann auf verschiedenen Wegen erhalten werden. Unter Bezug auf die Figuren 1 bis 4 werden zwei dieser Methoden beschrieben. Hierin werden die Begriffe "Signal" und "Puls" mitunter gleichbedeutend verwendet. Für die weiter unten folgende Beschreibung der Erfindung wird unter "Puls" zumeist ein optisches Signal sowie unter "Signal" ein elektrisches oder elektronisches Signal verstanden.

Zunächst wird mit Bezug auf die Figuren 1 und 2 ein Verfahren erläutert, bei welchem ein Startsignal aus einem optischen Startpuls erhalten wird. Fig. 1 zeigt eine Vorrichtung 100 zur berührungslosen optischen Distanzmessung. Eine Lichtquelle 12 sendet dabei Lichtpulse aus, die über eine Linse 18 auf ein Objekt 14 in einem Nachweisbereich 16 geleitet werden. Nach Reflexion an dem Objekt 14 gelangen diese Lichtpulse, die nunmehr als Echopulse 30 bezeichnet werden, über eine Linse 22 auf einen Detektor 20 und werden dort nachgewiesen. Der Detektor 20 wird deshalb auch als Echoempfänger bezeichnet. Das Signal dieses Detektors 20, das auch als Echosignal 30 bezeichnet wird, wird der Messeinheit als Stoppsignal zugeführt. Um nun ein Startsignal für die Zeitmessung und damit für die Bestimmung der Entfernung des Objekts 14 zu gewinnen, werden bei dieser Methode aus den von der Lichtquelle 12 erzeugten Lichtpulsen ein Teil über einen halbdurchlässigen Spiegel 26 ausgekoppelt und über einen Umlenkspiegel 28 einem weiteren Detektor 24 zugeführt. Das Ausgangssignal des weiteren Detektors 24, der auch als Startpulsempfänger bezeichnet wird, wird einer nachgeordneten Messeinheit zur Bearbeitung zugeführt.

Fig. 2 zeigt den zeitlichen Verlauf eines Echosignals 30, welches im Detektor 20 nachgewiesen wird, sowie des im weiteren Detektor 24 nachgewiesenen optischen Startsignals 32. Aus einer Zeitdifferenz, welche in Fig. 2 durch einen Pfeil 34 angedeutet ist, kann, gegebenenfalls nach Vornahme weiterer Korrekturen und Kompensationen, auf die Entfernung des Objekts 14 zur Vorrichtung 100 geschlossen werden. Insbesondere ist aus Fig. 2 ersichtlich, dass das Echosignal und das optische Startsignal 32 einander zeitlich überlappen können, da sie in unterschiedlichen Detektoren nachgewiesen werden.

Durch die Verwendung von zwei optischen Detektoren ist es au-ßerdem möglich, auch sehr kurze Entfernungen, beispielsweise unmittelbar vor den Linsen 18, 22, zu erfassen.

Voraussetzung für eine hohe Messgenauigkeit, also geringe Messfehler, ist bei diesem Verfahren, dass sich die Detektoren 20, 24 nahezu identisch verhalten. Nachteilig bei diesem Aufbau ist demnach, dass die grundsätzlich immer vorhandenen und unterschiedlichen Bauteiltoleranzen, selbst wenn sie gering sind, zwangsläufig zu unterschiedlichen Eigenschaften der beiden Detektoren 20, 24 führen. Diese Unterschiede schlagen sich somit unmittelbar in Messfehlern nieder. Solche Fehler können beispielsweise in Form von Laufzeitunterschieden auftreten, die stark temperaturabhängig sind. Solche Ungenauigkeiten können zwar grundsätzlich durch Messen der Temperatur und Berücksichtigung geeigneter Kompensationen ausgeglichen werden, die aber selbst nicht zwingend langzeitstabil sind.

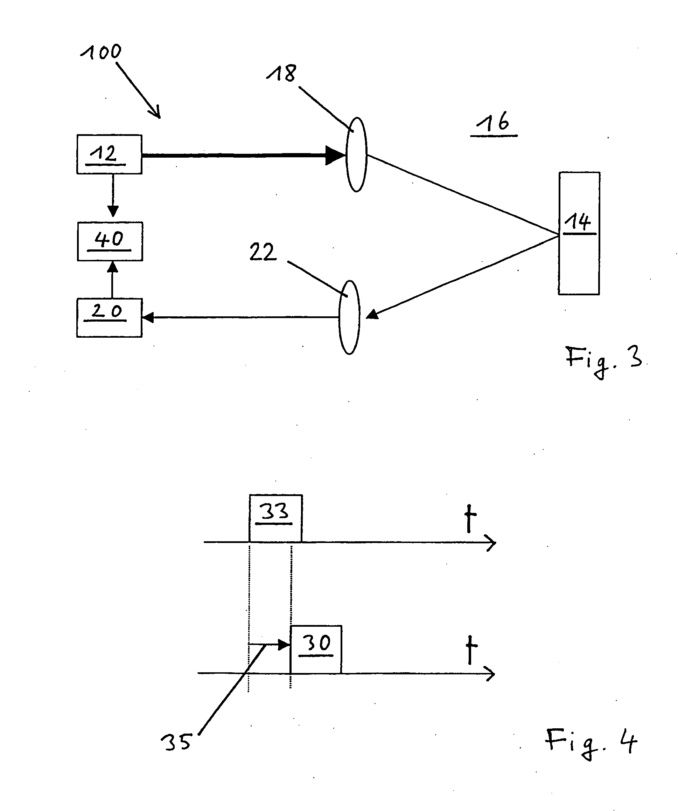

Bei einer alternativen Variante des Verfahrens wird ein Startsignal nicht unmittelbar aus dem gesendeten Laserlicht erzeugt, sondern aus einer elektrischen Ansteuerung der Lichtquelle gewonnen. Dieses Verfahren wird mit Bezug auf die Figuren 3 und 4 erläutert. Äquivalente Komponenten sind dort mit denselben Bezugszeichen wie in den Figuren 1 und 2 versehen und werden nicht gesondert beschrieben. In Fig. 3 ist schematisch dargestellt, dass aus der Lichtquelle 12 ein Signal abgeleitet und einer Zeitmesseinrichtung 40 zugeführt wird.

Hierbei handelt es sich um ein elektrisches Startsignal 33, dessen zeitlicher Verlauf in Fig. 4 gezeigt ist. Ebenso wird ein Ausgangssignal des Detektors 20, bei welchem es sich um ein Echosignal 30 handelt, der Zeitmesseinrichtung 40 eingegeben. Der zeitliche Verlauf des Echosignals 30 ist ebenfalls in Fig. 4 dargestellt. Wie bei dem im Zusammenhang mit den Figuren 1 und 2 beschriebenen verfahren, können sich auch hier das Startsignal 33 und der Echopuls 30 zeitlich überlappen, da sie physikalisch auf unterschiedlichen Wegen gewonnen werden. Aus der Zeitdifferenz zwischen dem Startsignal 33 und dem Echopuls 30, die in Fig. 4 durch einen Pfeil 35 gekennzeichnet ist, kann die Entfernung des Objekts 14 erhalten werden.

Vorteilhaft ist bei diesem Verfahren, dass einfachere und vor allem preiswertere Bauteile verwendet werden können.

In DE 198 30 684 C1 ist eine optoelektronische Vorrichtung zur Entfernungsmessung von Gegenständen nach dem Impulslaufzeitverfahren beschrieben. Um eine möglichst exakte Distanzmessung zu erreichen, wird für jeden einer Vielzahl von Sendelichtimpulsen durch Auswertung der aus dem entsprechenden Empfangssignal gewonnenen Folge von diskreten Abtastwerten eine Laufzeit des Sendelichtpulses ermittelt und daraus wird ein Abtastwert errechnet. Dabei wird der zeitliche Verlauf der Amplitude des Empfangssignals mit verschiedenen Zeitversätzen abgetastet und die zeitliche Verzögerung des Maximalwerts gegenüber dem Sendelichtpuls wird als Laufzeit des Sendelichtpulses ausgegeben.

Gegenstand von US 2005/0119846 A1 ist eine Kalibrierungsmethode von Zeitmessgeräten.

In DE 197 04 340 A1 ist ein Entfernungsmesser beschrieben, bei dem aus einem Sendebaustein ein Referenzlichtstrahl ausgekoppelt wird, der als Startsignal dient.

DE 197 03 633 A1 betrifft ein elektronisches Verfahren zur Bestimmung von Zeitintervallen.

In EP 0 933 649 A2 ist eine gattungsgemäße Vorrichtung und ein gattungsgemäßes Verfahren beschrieben, bei dem zum Trennen der Lichtpulse im Detektor ein Lichtwegumschalter vorhanden ist. Bevorzugt sollen dabei die optischen Wege so eingestellt werden, dass eine innere optische Weglänge und eine äußere optische Weglänge miteinander übereinstimmen.

**Aufgabe** der Erfindung ist es, eine Vorrichtung und ein Verfahren zur optoelektronischen berührungslosen Distanzmessung anzugeben, mit Welchem eine erhöhte Messgenauigkeit und leichtere Handhabbarkeit erzielt wird.

Diese Aufgabe wird durch die Vorrichtung mit den Merkmalen des Anspruchs 1 und durch das Verfahren mit den Merkmalen des Anspruchs 8 gelöst.

Vorteilhafte Ausgestaltungen der erfindungsgemäßen Vorrichtung sowie bevorzugte Varianten des erfindungsgemäßen Verfahrens sind Gegenstand der abhängigen Ansprüche.

Die Vorrichtung der oben angegebenen Art ist erfindungsgemäß dadurch weitergebildet, dass ein optischer Weg der Referenzpulse zum Detektor um mindestens eine Offsetstrecke kürzer oder länger ist als ein optischer Weg der Messpulse zum Detektor, dass der Detektor zum abwechselnden quantitativen Nachweis sowohl der Echopulse als auch der Referenzpulse dient, dass im Strahlengang der Echopulse ein steuerbarer Pulsabschwächer angeordnet ist zum gezielten Abschwächen der Echopulse, so dass diese mit den Referenzpulsen größenmäßig vergleichbar sind.

Das Verfahren der oben genannten Art ist erfindungsgemäß dadurch weitergebildet, dass ein optischer Weg der Referenzpulse um mindestens eine Offsetstrecke kürzer oder länger ist als ein optischer Weg der Messpulse, dass aus den Zeitpunkten, zu denen die Referenzpulse von dem Detektor nachgewiesen werden, und einem Startsignal eine Referenzentfernung bestimmt wird, dass die Echopulse mit einem steuerbaren Pulsabschwächer abgeschwächt werden, wobei der Pulsabschwächer in Abhängigkeit einer Energie der Referenzpulse so gesteuert wird, dass die Echopulse mit den Referenzpulsen vergleichbar sind, und dass die Referenzentfernung zum Eliminieren einer Drift verwendet wird.

Ein erster Kerngedanke der vorliegenden Erfindung kann darin gesehen werden, dass zum Nachweis der Echopulse und der Referenzpulse ein und derselbe Detektor verwendet wird. Sowohl die Referenzmessung als auch die eigentliche Entfernungsmessung erfolgen deshalb stets mit denselben Komponenten, so dass ein möglicher Fehler über Bauteiletoleranzen ausgeschlossen und dementsprechend eine erheblich verbesserte Messgenauigkeit erzielt werden kann. Die Messung von Referenz und Entfernung kann deshalb nicht gleichzeitig, sondern muss alternierend erfolgen.

Unter einem abwechselnden oder alternierenden Messen soll in diesem Zusammenhang ein Nacheinandermessen in Abgrenzung zu einem gleichzeitigen Messen verstanden werden. Erfindungsgemäß ist beispielsweise auch, wenn 100 Echosignale hintereinander gemessen werden und danach ein Referenzsignal gemessen wird. Dies kann im Einzelnen durch eine Steuerung festgelegt werden.

Ein weiterer Kerngedanke der vorliegenden Erfindung besteht darin, dass der optische Weg der Referenzpulse um mindestens eine Offsetstrecke kürzer oder länger ist als der optische Weg der Messpulse. Auf diese Weise ist es möglich, Referenzpulse und Echopulse so weit zeitlich zu trennen, dass sie einander beim Nachweis im Detektor nicht überlagern und demgemäß eine getrennte Pulserfassung möglich ist und eine Referenzentfernung bestimmt werden kann.

Ein dritter Kerngedanke ist schließlich darin zu sehen, dass im Strahlengang der Echopulse ein Pulsabschwächer angeordnet ist, mit welchem die Echopulse gezielt und gesteuert abgeschwächt werden, so dass sie mit den Referenzpulsen größenmä-ßig vergleichbar sind. Durch die etwa gleiche Höhe der Referenz- und der Echopulse wird die Genauigkeit der Zeitbestimmung, welche die Ableitung eines Zeitpunkts aus einem Puls mit zunächst beliebigem Zeitverhalten voraussetzt, weiter erhöht. Durch die Messung von Echopulsen und Referenzpulsen mit absolut denselben Bauteilen, werden alle möglichen Ursachen für Driften in die Messung beider Entfernungen einbezogen. Durch Bildung einer Differenz zwischen der Strecke Startpuls/Referenzsignal und der Strecke Startpuls/Echosignal wird eine sogenannte Differenzdistanz gebildet. Eine eventuell auftretende Drift wird durch diese Differenzbildung rechnerisch eliminiert.

Das erfindungsgemäße Verfahren zeichnet sich somit dadurch aus, dass alle Messungen von Referenzpulsen und Echopulsen mit denselben Bauteilen erfolgen können, mithin nur ein optischer Empfänger sowohl für die Referenz- als auch für die Echomessung benutzt wird. Weiterhin ist eine optische Weglänge für die interne Referenz mindestens eine Offsetstrecke kürzer oder länger als eine optische Weglänge für die eigentliche Entfernungsmessung. Wesentlich für die Erfindung ist außerdem, dass für die Signalstärke der Echosignale mit Hilfe eines steuerbaren Pulsabschwächers auf den entsprechenden Wert des Referenzsignals geregelt wird.

Unter der größenmäßigen Vergleichbarkeit kann beispielsweise eine pegelmäßige oder auch eine flächenmäßige Vergleichbarkeit der Pulse verstanden werden.

Bei der Lichtquelle kann es sich grundsätzlich um eine beliebige Lichtquelle handeln, die in der Lage ist, hinreichend kurze Pulse zu liefern. Bevorzugt werden Laser mit sichtbarem Licht oder Infrarotlicht verwendet. Auch der Einsatz von VCSELs oder RCLEDs ist möglich.

Als Detektoren können beispielsweise bekannte Photodioden verwendet werden.

Bei besonders bevorzugten Varianten des erfindungsgemäßen Verfahrens und der erfindungsgemäßen Vorrichtung durchlaufen die Referenzpulse und die Echopulse dieselben logischen Gatter. Mögliche Beeinträchtigungen der Messgenauigkeit aufgrund von Schwankungen der Bauteileeigenschaften können so vermieden werden.

Grundsätzlich kann auch der optische Weg durch die Referenzstrecke länger sein als der optische Weg für die Echopulse. Es kommt nur darauf an, dass der Unterschied hinreichend groß ist, dass sich die Pulse nicht im Detektor zeitlich überlappen können.

Bei einer besonders bevorzugten Ausgestaltung der erfindungsgemäßen Vorrichtung sind im optischen Weg der Messpulse und/oder im optischen Weg der Referenzpulse optische Fasern vorhanden. Definierte optische Wegstrecken lassen sich mit Hilfe von optischen Fasern besonders einfach verwirklichen. Insbesondere kann die erfindungsgemäß geforderte hinreichende Differenz zwischen der optischen Weglänge für die Messpulse und der optischen Weglänge der Referenzpulse sehr einfach und platzsparend realisiert werden. Darüber hinaus sind Aufbauten mit optischen Fasern gegenüber mechanischer Erschütterung vergleichsweise unempfindlich.

Als optische Fasern können grundsätzlich Monomode-Fasern eingesetzt werden. Dies hat den Vorteil, dass sich nur eine elektromagnetische Mode im Lichtleiter fortpflanzt und somit auch sehr kurze Pulse möglich sind. Für zahlreiche Anwendungen sind jedoch Multimode-Glasfasern zweckmäßig, da mit diesen Komponenten am Detektor höhere Intensitäten erzielt werden können.

Der Pulsabschwächer kann in einem einfachen Fall mechanisch aufgebaut und beispielsweise eine steuerbare mechanische Blende oder ein Graukeilrad sein.

Die Steuerung des Pulsabschwächers wird bevorzugt kontinuierlich nachgeführt. Hierfür wird die Entfernungs- und Referenzmessung repetierend durchgeführt. Die Nachregelung der Echopulse ist dabei durch die Schnelligkeit des Pulsabschwächers begrenzt. Eine raschere Nachregelung kann deshalb erzielt werden, wenn der Pulsabschwächer ein elektrooptischer, magnetooptischer oder akustooptischer Modulator oder ein AOTF ist.

Eine genauere Zeitmessung ist möglich, wenn zum präzisen Bestimmen der Zeitdifferenzen Feininterpolatoren verwendet werden. Insbesondere kann eine Zeitmesseinrichtung zum Bestimmen der Zeitdifferenz vorhanden sein, die folgende Komponenten aufweist: Eine digitale Clock zum Bestimmen eines digitalen Rohwerts aus Startsignal und Echosignal, mindestens zwei Feininterpolatoren zum Bestimmen einer Anfangszeitdifferenz zwischen Startsignal und Beginn des digitalen Rohwerts und einer Endzeitdifferenz zwischen Echosignal und Ende des digitalen Rohwerts durch Umsetzen von der Anfangszeitdifferenz beziehungsweise der Endzeitdifferenz entsprechenden analogen Signalen zu einer digitalen Anfangszeitdifferenz beziehungsweise digitalen Endzeitdifferenz.

Die Umsetzung der analogen Signale zu digitalen Ausgangssignalen durch die Feininterpolatoren erfolgt jeweils aufgrund einer individuellen Kennlinie dieser Feininterpolatoren. Eine präzise Zeitmessung kann grundsätzlich nur in Kenntnis dieser Kennlinie durchgeführt werden. Da ein Ausmessen dieser Kennlinie aufwändig und die Kennlinie selbst außerdem Driften, beispielsweise Temperaturdriften oder Alterungsdriften, ausgesetzt ist, ist es zweckmäßig, eine Kalibrierung der Feininterpolatoren automatisch durchzuführen. Dies wird bei einer vorteilhaften Weiterbildung der erfindungsgemäßen Vorrichtung mit Hilfe einer Recheneinheit ermöglicht, welche auf Grundlage einer Vielzahl von Zeitdifferenzmessungen eine statistische Auswertung vornimmt und unter Annahme einer Gleichverteilung für die Wahrscheinlichkeit, mit der Werte in einem bestimmten Werteintervall für die Anfangszeitdifferenz und die Endzeitdifferenz gemessen werden, Korrekturen für Nichtlinearitäten und/oder Driften der Feininterpolatoren errechnet.

Vorteilhaft ist hierbei, dass prinzipiell beliebige Driften und Nichtlinearitäten der Feininterpolatoren korrigiert werden können. Die Kennlinie braucht im Grundsatz nur monoton zu sein.

Ein weiterer, für die Praxis sehr bedeutsamer Vorteil ist, dass an die elektronischen Komponenten der Feininterpolatoren nur noch eine geringe Anforderung im Hinblick auf die Linearität und das Driftverhalten zu stellen ist, da die entsprechenden Korrekturen durch das hier vorgeschlagene Verfahren sehr präzise durchgeführt werden können. Hierdurch sind erhebliche Kosteneinsparungen möglich.

Die Korrekturen der Feininterpolatoren werden unter der Annahme errechnet, dass innerhalb eines bestimmten Werteintervalls alle Anfangszeitdifferenzen und Endzeitdifferenzen mit derselben Wahrscheinlichkeit gemessen werden. Diese Situation ist realisiert, wenn das zu messende Zeitintervall relativ zu der digitalen Clock keine Phasenkorrelation aufweist.

Eine Korrektur der Feininterpolatorwerte kann dann in einfacher Weise dadurch erhalten werden, dass eine Summe der Häufigkeiten, mit der einzelne Feininterpolatorwerte auftreten, gebildet wird, und dass korrigierte Feininterpolatorwerte gewonnen werden, indem die erhaltene Summe durch eine Konstante dividiert wird. Bevorzugt werden von dem erhaltenen Resultat nur die Ganzen berücksichtigt.

Diese Division kann rechentechnisch besonders rasch bewerkstelligt werden, wenn als Konstante eine Potenz von 2 gewählt wird. Zur Division muss dann nur die entsprechende Zahl von "Least significant Bits" weggelassen werden.

Um Schwierigkeiten mit sehr kurzen Pulsen und sehr kleinen Signalen zu vermeiden, ist es vorteilhaft, wenn zur Bestimmung des digitalen Rohwerts erst ab einer zweiten, auf ein auslösendes Ereignis folgenden Flanke der Clock gezählt wird. Ein auslösendes Ereignis kann beispielsweise eine ansteigende oder eine abfallende Flanke eines Startsignals oder eines Echosignals sein.

Eine weitere grundsätzliche Aufgabenstellung im Zusammenhang mit Laufzeitmessungen der hier beschriebenen Art besteht darin, dass bei einem Startsignal oder einem Echosignal klar sein muss, welcher Zeitpunkt genau diesem Signal zugeordnet wird.

Zweckmäßig wird man davon ausgehen, dass dieser Zeitpunkt in der Mitte zwischen einer ansteigenden und einer abfallenden Flanke dieser Signale liegt. Um diese ansteigenden und abfallenden Flanken jeweils berücksichtigen zu können, werden insgesamt vier Feininterpolatoren eingesetzt.

Die Pulse der Startsignale, Echosignale und Referenzsignale sind im Allgemeinen aus elementaren elektronischen Gründen nicht symmetrisch, so dass die Annahme eines Zeitpunkts in der Mitte zwischen zwei Zeitpunkten, bei denen eine Komparatorschwelle überschritten beziehungsweise unterschritten wird, fehlerbehaftet ist. Bei einer weiteren vorteilhaften Variante des erfindungsgemäßen Verfahrens werden deshalb der Pulsbreiten der Startsignale, Echosignale und/oder der Referenzsignale kompensiert.

Zweckmäßig werden vor Aufnahme eines eigentlichen Messbetriebs Tabellen zur Kompensation der Feininterpolatoren und/oder zur Pulskompensation aufgenommen. Die Tabellen zur Pulskompensation werden bevorzugt im Rahmen eines Grundabgleichs vor Auslieferung des Geräts an den Kunden erstellt.

Eine Tabelle oder mehrere Tabellen für die Kompensation der Feininterpolatoren können während des Messbetriebs kontinuierlich nachgeführt werden.

Im Hinblick auf die Genauigkeit der Messergebnisse ist es weiterhin von Vorteil, wenn die Entfernungsmessung repetierend durchgeführt wird und wenn über eine Vielzahl von Messwerten gemittelt wird. Insbesondere kann eine gleitende Mittelwertbildung durchgeführt werden.

Die Feininterpolatoren weisen zweckmäßig jeweils einen Time-Analog-Converter, TAC, sowie einen Analog-Digital-Converter, ADC, auf.

Ein wesentlicher Vorteil der hier beschriebenen Kompensationsmethode ist, dass im Hinblick auf diese Komponenten keine sehr hohe Genauigkeitsanforderung gestellt ist, so dass beispielsweise der TAC ein einfaches RC-Glied sein kann.

Das Startsignal für die Zeitmessung kann grundsätzlich als optisches Startsignal von den von der Lichtquelle ausgesandten Lichtpulsen abgeleitet werden. Der Nachweis dieses Startsignals kann dann prinzipiell in demselben Detektor wie die Referenz und Echopulse erfolgen, vorausgesetzt, die Differenz der jeweiligen optischen Weglängen ist groß genug, damit die Pulse nicht ineinander laufen können. Ansonsten kann auch ein separater Detektor vorgesehen werden, wobei hier eventuelle Unterschiede zu dem für Echo- und Referenzpulse verwendeten Detektor unerheblich sind, da diese durch Differenzbildung von Echo- und Referenzsignal ohnehin herausfallen.

Besonders bevorzugt wird das Startsignal aber aus einer elektrischen Ansteuereinheit der Lichtquelle abgeleitet. Vorteilhaft ist hierbei, dass einfachere und vor allem preiswertere Bauteile verwendet werden können. Eventuelle Driften, beispielsweise Temperatur- oder Alterungsdriften, könnten grundsätzlich kompensiert werden. Dies ist aber nicht nötig, da solche Driften bereits aufgrund der Differenzbildung zwischen Referenz- und Echosignal eliminiert werden.

Weitere Vorteile und Eigenschaften der vorliegenden Erfindung werden mit Bezug auf die beigefügten Figuren erläutert. Hierin zeigt:
- Fig. 1: eine schematische Ansicht einer Vorrichtung zur optoelektronischen Distanzmessung, bei der ein Startsignal optisch aus einer Lichtquelle abgeleitet wird;
- Fig. 2: Signalverläufe für die Vorrichtung aus Fig. 1;
- Fig. 3: eine schematische Darstellung einer Vorrichtung zur optoelektronischen Distanzmessung, bei der ein Startsignal elektrisch aus einer Lichtquelle abgeleitet wird;
- Fig. 4: Signalverläufe für die in Fig. 3 gezeigte Vorrichtung;
- Fig. 5: eine schematische Ansicht eines Ausführungsbeispiels einer erfindungsgemäßen Vorrichtung;
- Fig. 6: Signalverläufe für die in Fig. 5 gezeigte Vorrichtung;
- Fig. 7: ein Blockdiagramm von wesentlichen Komponenten einer erfindungsgemäßen Vorrichtung;
- Fig. 8: die für die Zeitmessung bei einer erfindungsgemäßen Vorrichtung relevanten Signalverläufe;
- Fig. 9: ein Beispiel einer Korrekturtabelle für einen Feininterpolator;
- Fig. 10: ein Diagramm mit kumulierten Messhäufigkeiten, aufgetragen gegen die Feininterpolatorwerte;
- Fig. 11: ein Diagramm mit kumulierten Messhäufigkeiten gegen aufgetragen gegen einen korrigierten Feininterpolatorwert; und
- Fig. 12: ein schematisches Flussdiagramm mit den wesentlichen Schritten zur Ermittlung der Entfernung eines Objekts.

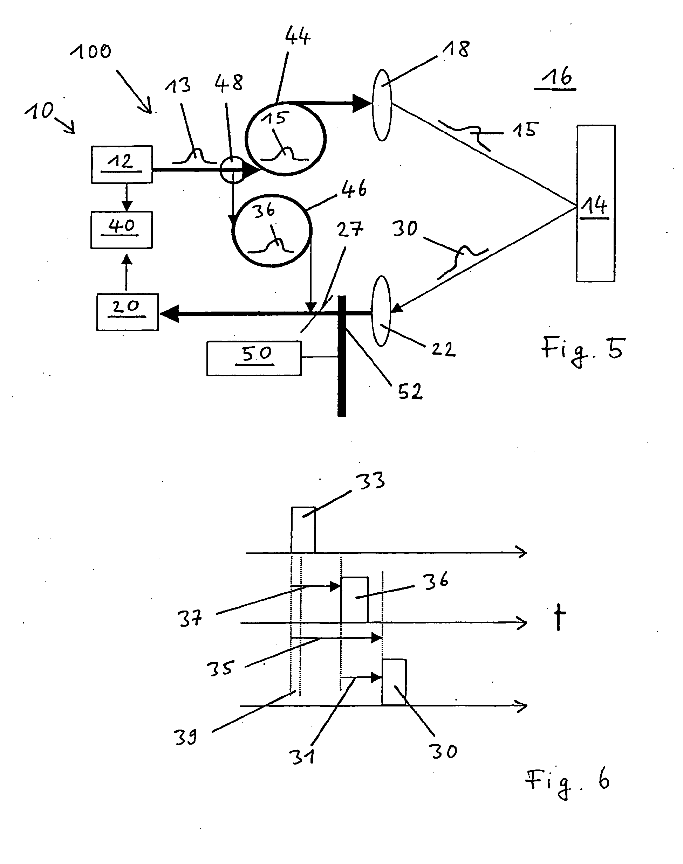

Ein Ausführungsbeispiel einer erfindungsgemäßen Vorrichtung wird mit Bezug auf die Figuren 5 und 6 beschrieben. Äquivalente Komponenten sind dort mit denselben Bezugszeichen wie in den Figuren 1 bis 4 gekennzeichnet.

Die in Fig. 5 gezeigte Vorrichtung 100 weist als wesentliche Komponenten eine Sensoreinheit 10 mit einer Lichtquelle 12 und einem Detektor 20 auf. Die Lichtquelle 12 sendet Lichtpulse 13 aus, welche in einer Einrichtung 48 in Messpulse 15 und Referenzpulse 36 aufgeteilt werden. Bei der Einrichtung 48 kann es sich beispielsweise um einen teildurchlässigen Spiegel handeln. Typischerweise werden nur einige Prozent der einkommenden Intensität als Referenzpuls ausgespiegelt. Sodann werden die Messpulse 15 durch eine optische Faser 44, welche auch als Messfaser bezeichnet werden kann, geleitet. Über eine Linse 18 als Teil einer Messoptik werden die Messpulse 15 im Anschluss auf ein Objekt 14 geleitet, dessen Entfernung zur Sensoreinheit 10 gemessen werden soll. Die Messpulse 15 werden am Objekt 14 reflektiert. Die reflektierten Messpulse 15, die auch als Echopulse 30 bezeichnet werden können, gelangen auf eine Linse 22 als weiterem Teil einer Messoptik, treten sodann durch einen erfindungsgemäß vorgesehenen Pulsabschwächer 50 und gelangen schließlich zum Detektor 20, wo sie nachgewiesen werden. Ein Ausgangssignal des Detektors 20 wird einer Zeitmesseinrichtung 40 eingegeben. Außerdem wird der Zeitmesseinrichtung 40 ein von der Lichtquelle 12 abgeleitetes elektrisches Startsignal zugeführt. Das elektrische Startsignal ist das Abbild des Stroms der Laserdiode. Das Laserlicht selbst wird um einige Pikosekunden verzögert erzeugt. Der elektrische Startpuls wird als Bezugspunkt für die Referenz- und die Entfernungsmessung verwendet. Bei dem Pulsabschwächer 50 handelt es sich im gezeigten Beispiel um eine einstellbare mechanische Blende 52.

Um die oben im Zusammenhang mit den Figuren 1 bis 4 erläuterten Ungenauigkeiten und Messfehler zu vermeiden, wurde erfindungsgemäß eine sogenannte Referenzstrecke in den Sensor integriert. Mit Hilfe dieser Strecke können auftretende Fehler, beispielsweise Driften, eliminiert werden.

Fig. 5 zeigt schematisch den Aufbau einer solchen Referenzstrecke. Die in der Einrichtung 48 abgeleiteten Referenzpulse 36 werden über eine optische Faser 46, die auch als Referenzfaser bezeichnet werden kann, auf einen teildurchlässigen Spiegel 27 und von diesem auf den Detektor 20 geleitet, wo sie nachgewiesen werden. Ein entsprechendes Nachweissignal wird wiederum der Zeitmesseinrichtung 40 zugeführt. Der Referenzpuls wird über einen definiert verzögerten optischen Kurzschluss im optischen Empfänger erzeugt. Er repräsentiert die Referenzentfernung für die Messung. Der Echopuls wird im gleichen optischen Empfänger wie der Referenzpuls erzeugt. Er wird vom Messziel, also vom Objekt, reflektiert. Die Zeitverzögerung zum gesendeten Laserpuls ist das Maß für die Entfernung.

Der zeitliche Verlauf der einzelnen Signale, die der Zeitmesseinrichtung 40 zugeführt werden, ist in Fig. 6 schematisch dargestellt. Zunächst erhält die Zeitmesseinrichtung 40 als erstes ein aus der Lichtquelle 12 abgeleitetes elektrisches Startsignal 33. Über die im Wesentlichen durch die optische Faser 46 gebildete Referenzstrecke gelangt danach ein Referenzpuls 36 auf den Detektor 20. Eine Zeitverzögerung zwischen dem elektrischen Startsignal 33 und dem Zeitpunkt, zu dem der Referenzpuls 36 im Detektor 20 nachgewiesen wird, ist in Fig. 6 durch einen Pfeil 37 gekennzeichnet.

Nochmals zeitlich verzögert durch eine Laufzeit zum nachzuweisenden Objekt 14 und durch eine Verzögerungsstrecke in der optischen Faser 44 im Gerät wird der Detektor 20, welcher auch als Echoempfänger bezeichnet wird, mit dem Echosignal 30 beaufschlagt. Die Differenz zwischen der optischen Weglänge in der optischen Faser 46, die auch als Referenzfaser bezeichnet wird, und derjenigen in der auch als Messfaser bezeichneten optischen Faser 44 entspricht im Wesentlichen der Offsetstrecke. Die Zeitdifferenz zum elektrischen Startsignal 33 ist in Fig. 6 durch einen Pfeil 35, die Laufzeitdifferenz zum Referenzpuls 36 durch einen Pfeil 31 gekennzeichnet. Um für die Messung der Referenz- und der Echopulse jeweils weitestgehend gleiche Verhältnisse zu erhalten, werden erfindungsgemäß mit Hilfe des Pulsabschwächers 50 die Echopulse 30 so abgeschwächt, dass sie weitestgehend den Referenzpulsen 36 entsprechen. Die Pulse können beispielsweise auf im Wesentlichen übereinstimmende Pegel oder Pulshöhe, alternativ aber auch auf etwa gleiche Fläche der Peaks, geregelt werden. Die Regelung auf dieselbe Höhe oder Fläche hat den Vorteil, dass eine Drift der Pulsformen, die eigentlich ein Nachführen von Kompensationstabellen erforderlich machen würde, praktisch ohne Auswirkung bleibt, da sie sich auf Referenz- und Echopuls in derselben Weise auswirkt und deshalb eliminiert wird.

Um für den Referenzpuls eine gewünschte Höhe zu erhalten, kann in dessen Strahlengang ein fester Pulsabschwächer, beispielsweise ein fest zu justierendes Graukeilrad, eingebaut werden.

Die Messung der Distanzen erfolgt dann nacheinander zwischen Startsignal 33 und Referenzpuls 36 beziehungsweise zwischen Startsignal 33 und Echopuls 30. Durch Differenzbildung der jeweils gemessenen Werte können mögliche Driften, die in Fig. 6 mit dem Bezugszeichen 39 gekennzeichnet sind, eliminiert werden.

Bei diesem Ausführungsbeispiel der Erfindung ist die Lichtquelle 12, die auch als Sender oder Sendediode bezeichnet werden kann, mit einer Glasfaser gekoppelt, die sich in eine Messfaser 44 und eine Referenzfaser 46 teilt, wobei die Messfaser 44 um die Offsetstrecke länger als die Referenzfaser 46 ausgeführt ist. Das Startsignal 33 wird sowohl für eine Entfernungsmessung als auch für eine Referenzmessung aus der elektrischen Ansteuerung der Sendediode gewonnen. Der gemessene Wert für die Referenzstrecke kann über einen längeren Zeitraum gemittelt werden.

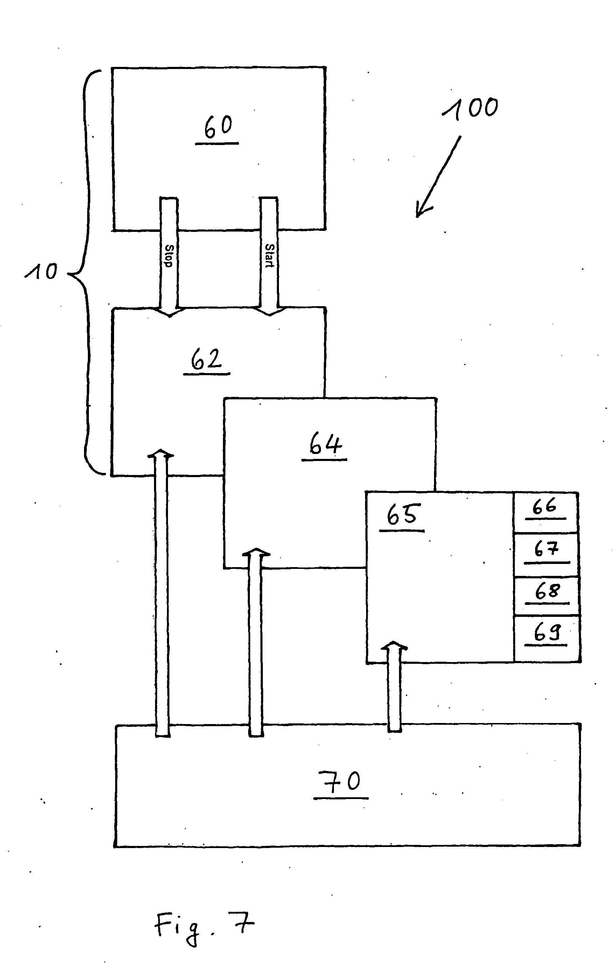

Fig. 7 zeigt schematisch die wesentlichen Komponenten einer erfindungsgemäßen Vorrichtung 100 zur optoelektronischen berührungslosen Distanzmessung. Wesentlicher Teil der Vorrichtung 100 ist eine Sensoreinheit 10, welche die vorstehend erläuterte Optoelektronik 60 und einen Messkern 62 umfasst. Zum präzisen Ermitteln der Zeitdifferenzen sind eine Digital-Datenerfassung 64 sowie eine Analog-Datenerfassung 65 mit insgesamt vier Feininterpolatoren 66, 67, 68, 69 vorgesehen. Sämtliche dieser Komponenten werden mit Hilfe eines Auswerte-/Steuerungsrechners 70 gesteuert, dem auch die jeweiligen Daten zur Verarbeitung zugeführt werden.

Eine Ablaufsteuerung für die Messungen wird durch ein FPGA durchgeführt. Das FPGA führt die Messungen selbstständig durch, um Rohwerte zu erhalten und steuert dabei den Laser und liest den ADC aus. Darüber hinaus kann es einen Blendenmotor des Pulsabschwächers regeln. Die Lichtquelle 12, wobei es sich um einen Laser handelt, wird gezündet, und die Messimpulse des elektrischen Startsignals sowie die Signale des optischen Detektors werden einem Komparator und anschließend dem FPGA zugeführt. Das FPGA wandelt die zeitabhängigen Signale in Pulsbreiten, Feininterpolatorwerte und digitale Zählimpulse um. Die Pulsbreiten und die Feininterpolatorwerte werden anschließend in einem Zeit-Amplituden-Konverter, TAC, und nachfolgend in einem Analog-Digital-Konverter, ADC, in digitale Signale umgewandelt. Ein Messrechner erhält die Messwerte vom FPGA und passt sie zur Übertragung zu einem PC an. Die Rohdaten mehrerer Messungen werden gesammelt und an den PC übertragen.

Parallel dazu erfolgt erfindungsgemäß eine Regelung des Pulsabschwächers 50 mit regelbarer Blende 52 für den Echopuls 30. Diese Regelung kann beispielsweise über eine Pulsweitenmodulation für einen Betrieb mit einem Gleichstrommotor erfolgen. Alternativ kann auch ein Schrittmotor eingesetzt werden.

Zur Blendenregelung erhält das FPGA eine Sollwertvorgabe. Gleichzeitig liest es vom ADC einen Istwert einer Pulsbreite des Messwerts aus. Abhängig davon, ob dieser Messwert der Messwert eines Referenzpulses 36 oder eines Echopulses 30 ist, wird beim Echopuls ein Ist-/Sollwertvergleich durchgeführt und bei Abweichungen ein Gleichspannungspuls variabler Länge bis zum Erreichen eines Ausregelungszustands erzeugt. Bei sehr großen Abweichungen läuft der Blendenmotor dauernd. Bei Annäherung an den Sollwert werden die Pulse kontinuierlich auf 10 ms Länge verkürzt. Die Pulsfrequenz kann beispielsweise 10 Pulse/s betragen.

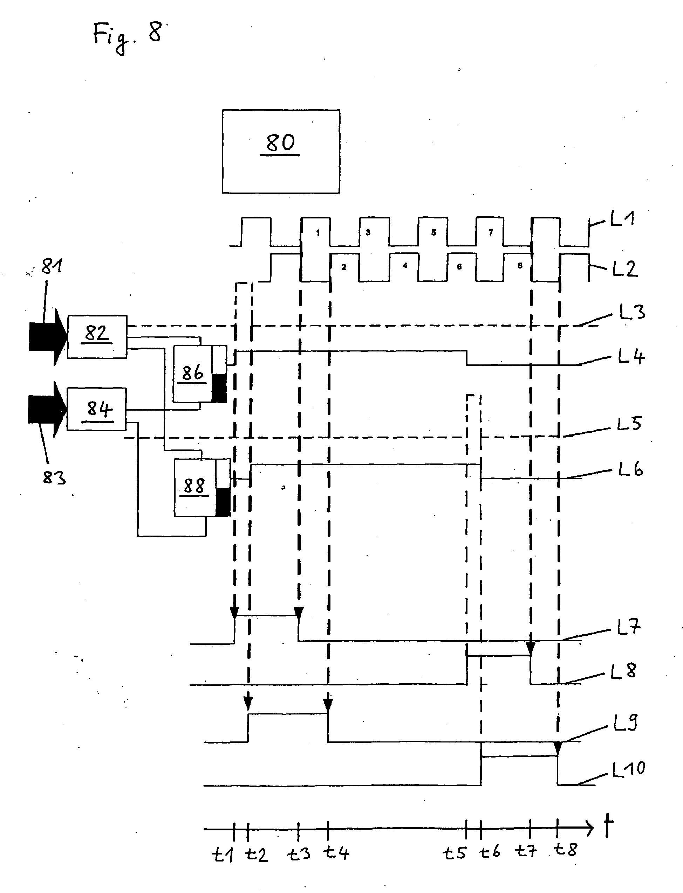

Der zeitliche Ablauf der für die Zeitmessung relevanten Signale wird mit Bezug auf Fig. 8 erläutert. Ein elektrischer Startpuls 81 und ein Echo- oder Referenzpuls 83 werden jeweils Komparatoren 82, 84 zugeführt. Die Ausgänge dieser Komparatoren sind mit Flip-Flops 86, 88 verbunden. Anhand der Ausgänge L4 und L6 der Flip-Flops 86, 88 erfolgt die Zeitmessung. Zunächst wird durch Vergleich der Ausgänge L4 und L6 mit einem Clocksignal L1 und einem invertierten Clocksignal L2, welche aus einer Clock 80 abgeleitet werden, ein digitaler Rohwert der Messung gewonnen. Dieser digitale Rohwert ist die grobe Messung der Entfernung auf eine halbe Clock-Periode genau und entspricht einem Zählwert zwischen dem Startsignal L3 und dem Echo-/Referenzsignal L5. Um die mit sehr kurzen Pulsen verbundenen Schwierigkeiten zu vermeiden, zählt die Messlogik erst die zweite, auf eine steigende Flanke des Startsignals L3 folgende steigende Flanke der Clock L1. Entsprechend wird auf eine abfallende Flanke des Startsignals L3 erst die zweite steigende Flanke des invertierten Clocksignals L3 gezählt. Analog ist das Zählverhalten für das Echo-/Referenzsignal L5, wo wiederum erst die jeweils zweite steigende Flanke gezählt wird.

Eine Anfangszeitdifferenz zwischen dem Startsignal L3 und der ersten für den digitalen Rohrwert gezählten Flanke sowie eine Endzeitdifferenz zwischen dem Echo-/Referenzsignal L5 und der letzten für den digitalen Rohwert gezählten Flanke wird mit Hilfe von Feininterpolatoren gemessen. Insgesamt werden im gezeigten Beispiel vier Feininterpolatoren verwendet, deren Eingangssignale mit L7, L8, L9 und L10 gekennzeichnet sind.

Der Zeitablauf der Signale wird mit Bezug auf die Zeitskala im unteren Bereich von Fig. 8 erläutert.

Der Zeitpunkt t1 entspricht einer ansteigenden Flanke des Startsignals L3. Dies stellt zugleich den Beginn der Zeitmessung für den ersten Feininterpolator L7 dar. Zum Zeitpunkt t2 fällt das Startsignal L3 wieder ab, woraufhin der dritte Feininterpolator L9 zu messen beginnt. Zu den Zeitpunkten t3 und t4 wird die Zeitmessung der Feininterpolatoren L7 bzw. L9 beendet, was einer ansteigenden Flanke der Clock L1 beziehungsweise der invertierten Clock L2 entspricht.

Analog werden die Feininterpolatoren L8, L10 durch die ansteigende beziehungsweise abfallende Flanke des Echo-/Referenzsignals L5 gestartet und durch die jeweils zweite darauf folgende ansteigende Flanke des Clocksignals L1 beziehungsweise der invertierten Clock L2 beendet. Dies erfolgt zu den Zeitpunkten t5 bis t8.

Die insgesamt vier Feininterpolatorwerte werden zu einem analogen Rohwert summiert, wobei in diese Summe die zur Anfangszeitdifferenz gehörenden Feininterpolatorwerte positiv und die zur Endzeitdifferenz gehörenden Feininterpolatorwerte negativ eingehen. Sämtliche Feininterpolatorwerte werden vor dieser Summenbildung einzeln kompensiert, was nachstehend noch genauer erläutert wird. Der so gewonnene analoge Rohwert kann als Feinbereich für die Entfernungsmessung angesehen werden.

Der analoge Rohwert und der digitale Rohwert werden zu einem komplexen Rohsignal addiert, das im Anschluss noch durch weitere Kompensationsschritte zum eigentlichen Messergebnis umgewandelt werden muss.

Um Nichtlinearitäten, Offset- und Steigungsfehler der Feininterpolatoren kompensieren zu können, werden Korrekturtabellen aufgenommen.

Bei jeder Einzelmessung werden vier Feininterpolatorwerte erzeugt, welche die Korrekturwerte zur Clock-Flanke für die steigenden und fallenden Flanken der Start- und Echopulse wiedergeben. Je genauer diese Feininterpolatorwerte sind, umso genauer sind die jeweilige Einzelmessung und demzufolge auch das Endergebnis.

Im gezeigten Beispiel beträgt die Frequenz der Clock 80 75 MHz. Die von den Feininterpolatoren zu messenden Zeiten können deshalb Werte zwischen 13 ns und 26 ns annehmen. Während dieser Zeittore wird eine Kapazität um ca. ein Volt geladen, wobei die Kondensatorspannungen jeweils ein Äquivalent zu der Zeit sind.

Im Einzelnen werden die Korrekturtabellen wie folgt gewonnen: Der AD-Wandler hat eine Auflösung von 12 Bit bei 5 V. Hieraus folgt ein Ausgabewert der Feininterpolatoren von etwa 800 bis etwa 1600. Aufgrund der erwähnten Nichtlinearitäten, Offset- und Steigungsfehlern ist aber real mit verschobenen und/oder gespreizten Werten zu rechnen. Diese Variationen sollen über eine Korrekturtabelle korrigiert werden.

Beim Aufbau der Tabelle sollen 1000 Häufigkeitsstufen im Durchschnitt mit 64 Ereignissen belegt sein. Das bedeutet, man benötigt 64000 Messwerte. Bei einer zu erwartenden Spreizung der AD-Wandlerwerte von etwa 800 treten dann pro Feininterpolatorwert etwa 80 Ereignisse ein. Es wird nun eine Tabelle aufgestellt, in der für jeden erhaltenen Feininterpolatorwert ein Zähler hochgezählt wird. Nach 64000 Messungen erhält man eine Verteilung der Häufigkeit der jeweils gemessenen Feininterpolatorwerte. Eine solche Verteilung wird für alle vier Feininterpolatoren gleichzeitig gemessen.

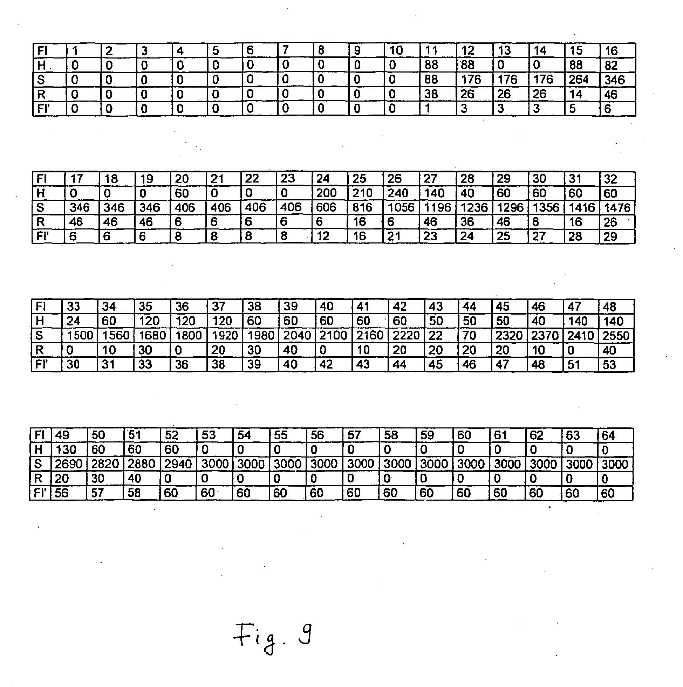

In Fig. 9 ist ein Beispiel einer Tabelle gezeigt, in welcher in der ersten Zeile die Feininterpolatorwerte, gekennzeichnet durch FI eingetragen sind. In der zweiten Zeile ist die Häufigkeit H eingetragen, mit welcher der jeweilige Feininterpolatorwert FI bei einer Gesamtzahl von 3000 Messungen erhalten wurde. Zeile 3 schließlich beinhaltet die summierte Häufigkeit S. Beispielsweise beträgt diese summierte Häufigkeit S ab dem Feininterpolatorwert FI = 53 bis FI = 64 konstant 3000, da keiner dieser Werte bei einer der 3000 durchgeführten Messungen erreicht wurde.

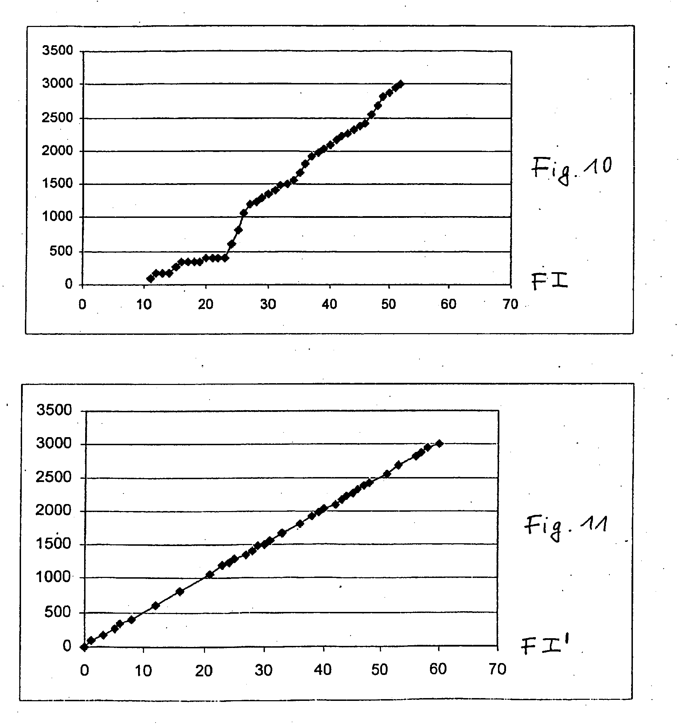

Fig. 10 zeigt die summierte Häufigkeit S aufgetragen gegen die Feininterpolatorwerte FI. Aus Fig. 10 ist unmittelbar ersichtlich, dass die Feininterpolatorwerte FI nicht gleichmäßig verteilt sind. Da aber das zu messende Zeitintervall gegenüber dem Clocksignal L1 keinerlei Phasenkorrelation aufweist, müssen sämtliche Feininterpolatorwerte mit derselben Häufigkeit gemessen werden. Mithin muss die summierte Häufigkeit S linear verteilt sein, da mathematisch die Feininterpolatorwerte gleichmäßig zwischen den Clock-Flanken verteilt sind. Deshalb ist eine Linearisierung der gemessenen summierten Häufigkeit S zulässig.

Es wird nun die eigentliche Korrektur berechnet. Der Korrekturwert FI' entspricht jeweils den Ganzen bei Division der summierten Häufigkeit S durch 50. Dies entspricht bei 3000 Messungen insgesamt 60 Häufigkeitsstufen. Außerdem ist in der Tabelle in Fig. 9 der verbleibende Rest R bei Division der summierten Häufigkeit S durch 50 eingetragen. Beispielsweise erhält man bei einem Feininterpolatorwert 23 eine summierte Häufigkeit S von 406. Division durch 50 ergibt einen korrigierten Feininterpolatorwert von FI' = 8 bei einem Rest von R = 6.

Bei dem oben erläuterten in der Praxis durchgeführten Beispiel werden stattdessen 64000 Messwerte aufgenommen und die summierte Häufigkeit S wird durch 64 dividiert. Dies lässt sich sehr einfach und schnell durch Wegstreichen der 6 geringwertigsten Bits erzielen. Man hat nun eine Tabelle erhalten, wo bei jedem beliebigen Feininterpolatorwert ein Korrekturwert von 0 bis 1000 ausgegeben wird. Die Häufigkeitsverteilung für die korrigierten Feininterpolatorwerte ist dann im Wesentlichen linear. Eine solche Tabelle wird für alle vier Feininterpolatoren aufgenommen.

Fig. 11 zeigt für die Werte der Tabelle aus Fig. 9 die summierte Häufigkeit S aufgetragen gegen die korrigierten Feininterpolatorwerte FI'. Es ist unmittelbar ersichtlich, dass die summierte Häufigkeit S nunmehr, wie gefordert, einen im Wesentlichen linearen Verlauf aufweist.

Zweckmäßig wird vor Beginn des eigentlichen Messbetriebs die Referenz sehr präzise mit einer Vielzahl von Messungen bestimmt. Beispielsweise können hierzu 20.000 Messungen durchgeführt werden. Im späteren eigentlichen Messbetrieb kann dann beispielsweise jeder 100. Messwert zur Nachführung eventueller Driften des Referenzwerts herangezogen werden. Hierbei kann ebenfalls eine geeignete Mittelwertbildung mit vorheriger Plausibilitätsprüfung durchgeführt werden.

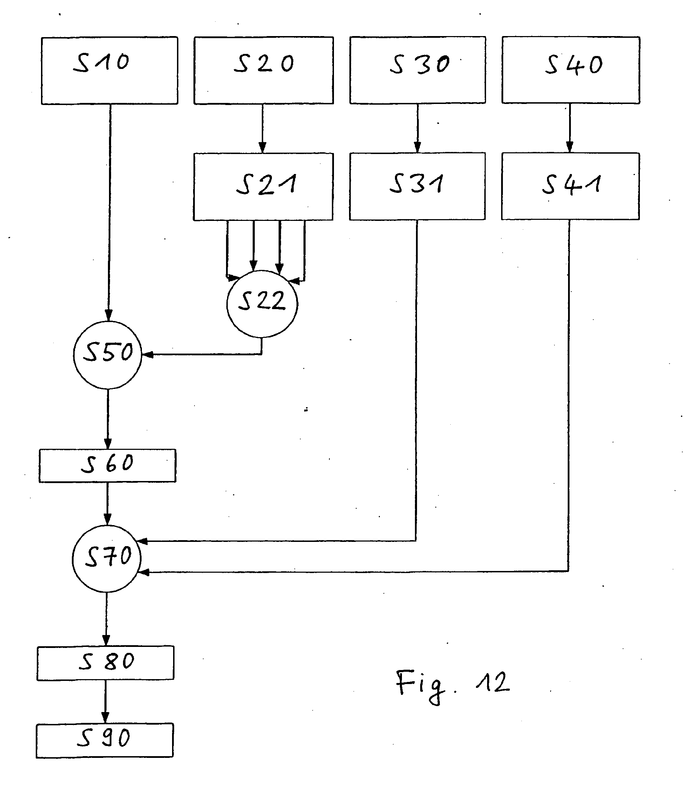

Anhand von Fig. 12 werden die wesentlichen für die Gewinnung des endgültigen Messergebnisses aus den gemessenen Zeiten relevanten Schritte erläutert.

Zunächst wird im Schritt S10 der digitale Rohwert durch Vergleich von Startsignal und Echo-/Referenzsignal mit dem Clocksignal L1 und dem invertierten Clocksignal L2 gewonnen. Außerdem werden im Schritt S20 vier Feininterpolatorwerte gewonnen, welche anhand von vier getrennten und ständig aktualisierten Kompensationstabellen kompensiert werden. Im Schritt S22 werden diese separat kompensierten Feininterpolatorwerte zum analogen Rohwert summiert. Im Schritt S50 wird der im Schritt S22 gewonnene analoge Rohwert sowie der digitale Rohwert aus Schritt S10 addiert. Man erhält somit im Schritt S60 den komplexen Rohwert oder Entfernungsrohwert.

Im Rahmen eines Grundabgleich des Geräts werden außerdem in den Schritten S31 und S41 Kompensationstabellen erstellt für die Pulsbreite des Startpulses und des Echo-/Referenzpulses. Die Pulsbreiten des Startpulses werden in Schritt S30, die Pulsbreiten des Echo-/Referenzpulses in Schritt S40 bestimmt. Aus den in S31 und S41 gewonnenen Tabellen folgen weitere additive Korrekturwerte zum Entfernungsrohwert, welche im Schritt S70 addiert werden.

Als letzter Schritt kann in 580 der sich aus der Referenzmessung ergebende Offsetwert abgezogen werden. Man erhält somit in Schritt S90 einen echten Entfernungswert.

## Patentansprüche

1. Vorrichtung zur optoelektronischen berührungslosen Distanzmessung nach dem Laufzeitprinzip, insbesondere zur Durchführung des Verfahrens nach einem der Ansprüche 8 bis 13,
mit einer Sensoreinheit (10) mit mindestens einer Lichtquelle (12) zum Aussenden von Lichtpulsen (13), mit einem Detektor (20) zum Nachweis von Lichtpulsen,
mit einer Einrichtung (48) zum Aufteilen der Lichtpulse (13) in jeweils einen Messpuls (15) und einen Referenzpuls (36),
mit einer Messoptik (18, 22) zum Leiten der Messpulse (15) auf ein Objekt (14), dessen Entfernung zur Sensoreinheit (10) gemessen werden soll, und zum Leiten von von dem Objekt (14) reflektierten Messpulsen (15) als Echopulse (30) auf den Detektor (20), und
mit einer Referenzoptik (27) zum Leiten der Referenzpulse (36) in Richtung des Detektors (20), wobei die Entfernung des Objekts (14) von der Sensoreinheit (10) bestimmbar ist aus einer Zeitdifferenz (35) zwischen einem von der Lichtquelle (12) oder einer elektrischen Ansteuereinheit der Lichtquelle (12) abgeleiteten Startsignal (33) und einem aus einem Echopuls (30) abgeleiteten Echosignal (L5),
wobei der Detektor (20) zum abwechselnden quantitativen Nachweis sowohl der Echopulse (30) als auch der Referenzpulse (36) dient, und
wobei im Strahlengang der Echopulse (30) ein steuerbarer Pulsabschwächer (50) angeordnet ist zum gezielten Abschwächen der Echopulse (30), so dass diese mit den Referenzpulsen (36) größenmäßig vergleichbar sind,
**dadurch gekennzeichnet,**
**dass** ein optischer Weg der Referenzpulse (36) zum Detektor (20) um mindestens eine Offsetstrecke kürzer oder länger ist als ein optischer Weg der Messpulse (15) zum Detektor (20), wobei die Offsetstrecke so groß gewählt ist, dass sich die Refererenzpulse (36) und die Messpulse (15) nicht im Detektor (20) zeitlich überlappen können, und
**dass** die Vorrichtung dazu ausgebildet ist, aus den Zeitpunkten, zu denen die Referenzpulse (36) von dem Detektor (20) nachgewiesen werden, und einem von der Lichtquelle (12) oder einer elektrischen Ansteuereinheit der Lichtquelle (12) abgeleiteten Startsignal (33) eine Referenzentfernung zu bestimmen und die Referenzentfernung zum Herausrechnen einer Drift (39) zu verwenden.

2. Vorrichtung nach Anspruch 1,
**dadurch gekennzeichnet,**
**dass** im optischen Weg der Messimpulse (15) und/oder im optischen Weg der Referenzpulse (36) optische Fasern (44, 46) vorhanden sind.

3. Vorrichtung Anspruch 1 oder 2,
**dadurch gekennzeichnet,**
**dass** der Pulsabschwächer (50) eine steuerbare Blende (52) oder ein Graukeilrad ist.

4. Vorrichtung nach einem der Ansprüche 1 bis 3,
**dadurch gekennzeichnet,**
**dass** der Pulsabschwächer ein elektrooptischer, magnetooptischer oder akustooptischer Modulator ist.

5. Vorrichtung nach einem der Ansprüche 2 bis 4,
**dadurch gekennzeichnet,**
**dass** als optische Fasern Multimodefasern eingesetzt sind.

6. Vorrichtung nach einem der Ansprüche 1 bis 5,
**dadurch gekennzeichnet,**
**dass** eine Zeitmesseinrichtung (40) zum Bestimmen der Zeitdifferenz vorhanden ist, die folgende Komponenten aufweist:
eine digitale Clock (80) zum Bestimmen eines digitalen Rohwerts aus Startsignal und Echosignal (L5),
mindestens zwei Feininterpolatoren (66, 67, 68, 69) zum Bestimmen einer Anfangszeitdifferenz zwischen Startsignal (L3) und Beginn des digitalen Rohwerts und einer Endzeitdifferenz zwischen Echosignal (L5) und Ende des digitalen Rohwerts durch Umsetzen von der Anfangszeitdifferenz bzw. der Endzeitdifferenz entsprechenden analogen Signalen zu einer digitalen Anfangszeitdifferenz bzw. digitalen Endzeitdifferenz.

7. Vorrichtung nach einem der Ansprüche 1 bis 6,
**dadurch gekennzeichnet,**
**dass** zur automatischen Kalibrierung der Feininterpolatoren (66, 67, 68, 69) eine Recheneinheit (70) vorhanden ist, welche auf Grundlage einer Vielzahl von Zeitdifferenzmessungen eine statistische Auswertung vornimmt und
unter Annahme einer Verteilung für die Wahrscheinlichkeit, mit der bestimmte Werte für die Anfangszeitdifferenz und die Endzeitdifferenz gemessen werden, insbesondere einer Gleichverteilung über ein bestimmtes Werteintervall, Korrekturen für Nichtlinearitäten und/oder Driften der Feininterpolatoren (66, 67, 68, 69) errechnet.

8. Verfahren zur optoelektronischen berührungslosen Distanzmessung, insbesondere unter Einsatz einer Vorrichtung nach einem der Ansprüche 1 bis 7, bei dem
- eine Lichtquelle: (12) einer Sensoreinheit (10) Lichtpulse (13) aussendet,
- die Lichtpulse (13) in jeweils einen Messpuls (15) und einen Referenzpuls (36) aufgeteilt werden,
- die Messpulse (15) über eine Messoptik (18, 22) auf ein Objekt (14), dessen Entfernung zur Sensoreinheit (10) gemessen werden soll, geleitet werden,
- von dem Objekt (14) reflektierte Messpulse (15) über die Messoptik (18, 22) als Echopulse (30) auf einen Detektor (20) geleitet und von diesem nachgewiesen werden,
- die Referenzpulse (36) über eine Referenzstrecke auf denselben Detektor (20) geleitet und von diesem nachgewiesen werden, wobei aus den Zeitpunkten, zu denen die Echopulse (30) von dem Detektor (20) nachgewiesen werden, und einem von der Lichtquelle (12) oder einer elektrischen Ansteuereinheit der Lichtquelle (12) abgeleiteten Startsignal (33) die Entfernung des Objekts (14) bestimmt wird,
- die Echopulse (30) mit einem steuerbaren Pulsabschwächer (50) abgeschwächt werden, wobei der Pulsabschwächer (50) in Abhängigkeit einer Energie der Referenzpulse (36) so gesteuert wird, dass die EchoPulse (30) mit den Referenzpulsen (36) vergleichbar sind,
**dadurch gekennzeichnet,**
**dass** ein optischer Weg der Referenzpulse (36) zum Detektor (20) um mindestens eine Offsetstrecke kürzer oder länger ist als ein optischer Weg der Messpulse (15) zum Detektor (20), wobei die Offsetstrecke so groß gewählt wird, dass sich die Referenzpulse (36) und die Messpulse (15) nicht im Detektor (20) zeitlich überlappen können,
**dass** aus den Zeitpunkten, zu denen die Referenzpulse (36) von dem Detektor (20) nachgewiesen werden, und einem von der Lichtquelle (12) oder einer elektrischen Ansteuereinheit der Lichtquelle (12) abgeleiteten Startsignal (33) eine Referenzentfernung bestimmt wird, und
**dass** die Referenzentfernung zum Herausrechnen einer Drift (39) verwendet wird.

9. Verfahren nach Anspruch 8,
**dadurch gekennzeichnet,**
**dass** die Steuerung des Pulsabschwächers (50) kontinuierlich nachgeführt wird.

10. Verfahren nach Anspruch 8 oder 9,
**dadurch gekennzeichnet,**
**dass** zum präzisen Bestimmen der Zeitdifferenzen Feininterpolatoren (66, 67, 68, 69) verwendet werden.

11. Verfahren nach einem der Ansprüche 8 bis 10,
**dadurch gekennzeichnet,**
**dass** das Startsignal (33) optisch von der Lichtquelle (12) abgeleitet wird.

12. Verfahren nach einem der Ansprüche 8 bis 11,
**dadurch gekennzeichnet,**
**dass** die Referenzpulse (36) und die Echopulse (30) dieselben logischen Gatter durchlaufen.

13. Verfahren nach einem der Ansprüche 8 bis 10 oder 12,
**dadurch gekennzeichnet,**
**dass** das Startsignal (33) als elektrisches Startsignal von der Ansteuerung der Lichtquelle (12) abgeleitet wird.

## Claims

1. Apparatus for the opto-electronic contactless range measurement according to the transit time principle, particularly for performing the method according to one of claims 8 to 13,
having:
- a sensor unit (10) with at least one light source (12) for emitting light pulses (13) and a detector (20) for detecting light pulses,
- a device (48) for dividing the light pulses (13) in each case into a measurement pulse (15) and a reference pulse (36),
- a measurement optics (18, 22) for conducting the measurement pulses (15) onto an object (14) whose distance from the sensor unit (10) is to be measured and for conducting measurement pulses (15) reflected by the object (14) in form of echo pulses (30) onto the detector (20), and
- reference optics (27) for conducting the reference pulses (36) in the direction of the detector (20), the distance of said object (14) from said sensor unit (10) being determinable from a time difference (35) between a starting signal (33) derived from said light source (12) or from an electrical control unit for said light source (12) and an echo signal (L5) derived from an echo pulse (30),
- wherein the detector (20) is used for alternating quantitative detection of both the echo pulses (30) and reference pulses (36), and
- wherein the optical path of the echo pulses (30) contains a controllable pulse attenuator (50) for controlled attenuation of the echo pulses (30), so that they are dimensionally comparable with the reference pulses (36),
**characterized in**
**that** an optical path of the reference pulses (36) to said detector (20) is shorter or longer by at least one offset distance than an optical path of the measurement pulses (15) to said detector (20), which offset path is long enough to prevent said reference pulses (36) and said measurement pulses (15) from temporarily overlapping in said detector (20), and
**that** the apparatus is adapted to determine a reference distance from the moments at which the reference pulses (36) are detected by said detector (20) and from a starting signal (33) derived from said light source (12) or from an electrical control unit for said light source (12) and to use said reference distance for computationally eliminating a drift (39).

2. Apparatus according to claim 1,
**characterized in that**
optical fibers (44, 46) are present in the optical path for said measurement pulses (15) and/or in the optical path for said reference pulses (36).

3. Apparatus according to claim 1 or claim 2,
**characterized in that**
said pulse attenuator (50) is a controllable aperture (52) or a gray-scale wheel.

4. Apparatus according to any one of claims 1 to 3,
**characterized in that**
said pulse attenuator is an electro-optical, magneto-optical, or acousto-optical modulator.

5. Apparatus according to any one of claims 2 to 4,
**characterized in that**
the optical fibers used are multimode fibers.

6. Apparatus according to any one of claims 1 to 5,
**characterized in that**
a time-measuring device (40) is provided for determining the time difference, the time-measuring device (40) having the following components:
- a digital clock (80) for determining a digital raw value from said starting signal and said echo signal (L5),
- at least two fine interpolators (66, 67, 68, 69) for determining an initial time difference between said starting signal (L3) and the beginning of said digital raw value and a final time difference between said echo signal (L5) and the end of said digital raw value by converting analog signals corresponding to the initial time difference or the final time difference respectively into a digital initial time difference or a digital final time difference respectively.

7. Apparatus according to any one of claims 1 to 6,
**characterized in that**
for automatic calibration of said fine interpolators (66, 67, 68, 69) a computing unit (70) is provided which performs a statistical evaluation on the basis of a plurality of time-difference measurements and, assuming a distribution of the probability with which certain values of the initial time difference and final time difference will be measured, in particular an equal distribution over a given interval of values, calculates corrections for nonlinearities and/or drifts of said fine interpolators (66, 67, 68, 69).

8. Method for the opto-electronic contactless range measurement, particularly using an apparatus according to any one of claims 1 to 7, in which
- a light source (12) of a sensor unit (10) emits light pulses (13),
- said light pulses (13) are divided in each case into a measurement pulse (15) and a reference pulse (36),
- said measurement pulses (15) are conducted by a measurement optics (18, 22) to an object (14) whose distance from the sensor unit (10) is to be measured,
- measurement pulses (15) reflected by said object (14) are conducted by said measurement optics (18, 22) in form of echo pulses (30) onto a detector (20) and are detected thereby,
- said reference pulses (36) are conducted through a reference path to the same detector (20) and are detected thereby, the distance of the object (14) being determined from the moments at which said echo pulses (30) are detected by said detector (20) and from said starting signal (33) derived from said light source (12) or from an electrical control unit for said light source (12), and
- said echo pulses (30) are attenuated by means of a controllable pulse attenuator (50), which pulse attenuator (50) is controlled depending on an energy of the reference pulses (36) so that the echo pulses (30) are comparable to the reference pulses (36),
**characterized in**
- **that** an optical path of the reference pulses (36) to said detector (20) is shorter or longer by at least one offset distance than an optical path of the measurement pulses (15) to said detector (20), which offset path is long enough to prevent said reference pulses (36) and said measurement pulses (15) from temporarily overlapping in said detector (20),
- **that** a reference distance is determined from the moments at which the reference pulses (36) are detected by said detector (20) and from a starting signal (33) derived from said light source (12) or from an electrical control unit for said light source (12), and
- **that** said reference distance is used for computationally eliminating a drift (39).

9. Method according to claim 8,
**characterized in that**
the control of said pulse attenuator (50) is continuously tracked.

10. Method according to claim 8 or claim 9,
**characterized in that**
fine interpolators (66, 67, 68, 69) are used for precise determination of the time differences.

11. Method according to any one of claims 8 to 10,
**characterized in that**
said starting signal (33) is derived optically from said light source (12).

12. Method according to any one of claims 8 to 11,
**characterized in that**
said reference pulses (36) and said echo pulses (30) pass through the same logical gates.

13. Method according to any one of claims 8 to 10 or 12,
**characterized in that**
said starting signal (33) is derived as an electrical start signal from the control
unit for said light source (12).

## Revendications

1. Dispositif de mesure optoélectronique sans contact d'une distance selon le principe du temps de parcours, en particulier pour appliquer le procédé selon l'une quelconque des revendications 8 à 13,
avec une unité de capteur (10) avec au moins une source lumineuse (12) pour envoyer des impulsions lumineuses (13), avec un détecteur (20) pour détecter des impulsions lumineuses,
avec un dispositif (48) pour diviser les impulsions lumineuses en respectivement une impulsion de mesure (15) et une impulsion de référence (36),
avec une optique de mesure (18, 22) pour envoyer les impulsions de mesure (15) sur un objet (14) dont la distance depuis l'unité de capteur (10) doit être mesurée, et pour envoyer des impulsions de mesure (15) réfléchies par l'objet (14) sur le détecteur (20) en tant qu'impulsions d'écho (30), et
avec une optique de référence (27) pour envoyer les impulsions de référence (36) en direction du détecteur (20), la distance entre l'objet (14) et l'unité de capteur (10) pouvant être déterminée à partir d'une différence temporelle (35) entre un signal de départ (33) tiré de la source lumineuse (12) ou d'une unité électrique de commande de la source lumineuse (12) et un signal d'écho (L5) tiré d'une impulsion d'écho (30),
dans lequel le détecteur (20) sert à la détermination quantitative alternée des impulsions d'écho (30) et des impulsions de référence (36), et sur le trajet de rayons des impulsions d'écho (30) est placé un atténuateur d'impulsions (50) commandable pour atténuer de manière ciblée les impulsions d'écho (30), de façon que celles-ci puissent être comparées aux impulsions de référence (36) en termes de taille,
**caractérisé en ce qu'**
un trajet optique des impulsions de référence (36) en direction du détecteur (20) est plus court ou plus long d'au moins une distance de décalage par rapport à un trajet optique des impulsions de mesure (15) jusqu'au détecteur (20), la distance de décalage devant être choisie de façon que les impulsions de référence (36) et les impulsions de mesure (15) ne puissent pas se chevaucher dans le temps sur le détecteur (20), et
**en ce que** le dispositif est conformé pour, à partir des instants auxquels les impulsions de référence (38) sont détectées par le détecteur (20) et d'un signal de départ (33) tiré de la source lumineuse (12) ou d'une unité électrique de commande de la source lumineuse (12), déterminer un éloignement de référence et utiliser l'éloignement de référence pour calculer une dérive (39).

2. Dispositif selon la revendication 1,
**caractérisé en ce que**
sur le trajet optique des impulsions de mesure (15) et/ou sur le trajet optique des impulsions de référence (36), se trouvent des fibres optiques (44, 46).

3. Dispositif selon la revendication 1 ou 2,
**caractérisé en ce que**
l'atténuateur d'impulsions (50) est un diaphragme commandable (52) ou une roue à plages de gris.

4. Dispositif selon l'une quelconque des revendications 1 à 3,
**caractérisé en ce que**
l'atténuateur d'impulsions est un modulateur électro-optique, magnéto-optique ou acousto-optique.

5. Dispositif selon l'une quelconque des revendications 2 à 4,
**caractérisé en ce qu'**
en tant que fibres optiques, on utilise des fibres multimodes.

6. Dispositif selon l'une quelconque des revendications 1 à 5,
**caractérisé en ce qu'**
un dispositif de mesure de temps (40) est présent pour déterminer la différence de temps, lequel présente les composants suivants:
une horloge numérique (80) pour déterminer une valeur numérique brute à partir du signal de départ et du signal d'écho (L5),
au moins deux interpolateurs fins (66, 67, 68, 69) pour déterminer une différence de temps initial entre le signal de départ (L3) et le début de la valeur numérique brute et une différence de temps final entre le signal d'écho (L5) et la fin de la valeur numérique brute par transformation de signaux analogiques correspondants à la différence de temps initial ou à la différence de temps final en une différence de temps initial numérique ou une différence de temps final numérique.

7. Dispositif selon l'une quelconque des revendications 1 à 6,
**caractérisé en ce que**,
pour le calibrage automatique des interpolateurs fins (66, 67, 68, 69) se trouve une unité de calcul (70) qui, sur la base d'une pluralité de mesures de différence de temps, procède à une analyse statistique et, en supposant une distribution de la probabilité avec laquelle certaines valeurs sont mesurées pour la différence de temps initial et la différence de temps final, en particulier une distribution homogène sur un intervalle de valeurs donné, calcule des corrections pour des non-linéarités et/ou des dérives des interpolateurs fins (66, 67, 68, 69).

8. Procédé de mesure optoélectronique sans contact d'une distance, en particulier en utilisant un dispositif selon l'une quelconque des revendications 1 à 7, dans lequel
- une source lumineuse (12) d'une unité de capteur (10) envoie des impulsions lumineuses (13),
- les impulsions lumineuses (13) sont divisées chacune en une impulsion de mesure (15) et une impulsion de référence (36),
- les impulsions de mesure (15) sont envoyées par une optique de mesure (18, 22) sur un objet (14) dont la distance depuis l'unité de capteur (10) doit être mesurée,
- les impulsions de mesure (15) réfléchies par l'objet (14) sont envoyées sur un détecteur (20) par l'intermédiaire de l'optique de mesure (18, 22) en tant qu'impulsions d'écho (30) et détectées par celui-ci,
- les impulsions de référence (36) sont envoyées vers le même détecteur (20) par un trajet de référence et détectées par celui-ci, l'éloignement de l'objet (14) étant déterminé à partir des instants auxquels les impulsions d'écho (30) sont détectées par le détecteur (20) et d'un signal de départ (33) tiré de la source lumineuse (12) ou d'une unité électrique de commande de la source lumineuse (12),
- les impulsions d'écho (30) sont atténuées par un atténuateur d'impulsions commandable (50), l'atténuateur d'impulsions (50) étant commandé en fonction d'une énergie des impulsions de référence (36) de telle manière que les impulsions d'écho (30) soient comparables avec les impulsions de référence (36),
**caractérisé en ce qu'**
un trajet optique des impulsions de référence (36) en direction du détecteur (20) est plus court ou plus long d'au moins une distance de décalage par rapport à un trajet optique des impulsions de mesure (15) jusqu'au détecteur (20), la distance de décalage devant être choisie de telle sorte que les impulsions de référence (36) et les impulsions de mesure (15) ne puissent pas se chevaucher dans le temps sur le détecteur (20),
**en ce qu'**à partir des instants auxquels les impulsions de référence (36) sont détectées par le détecteur (20) et d'un signal de départ (33) tiré de la source lumineuse (12) ou d'une unité électrique de commande de la source lumineuse (12), on détermine un éloignement de référence, et
**en ce que** l'éloignement de référence est utilisé pour calculer une dérive (39).

9. Procédé selon la revendication 8,
**caractérisé en ce que**
la commande de l'atténuateur d'impulsions (5à) est effectuée de manière continue.

10. Procédé selon la revendication 8 ou 9,
**caractérisé en ce que**
pour déterminer précisément les différences de temps, des interpolateurs fins (66, 67, 68, 69) sont utilisés.

11. Procédé selon l'une quelconque des revendications 8 à 10,
**caractérisé en ce que**
le signal de départ (33) est tiré optiquement de la source lumineuse (12).

12. Procédé selon l'une quelconque des revendications 8 à 11,
**caractérisé en ce que**
les impulsions de référence (36) et les impulsions d'écho (30) traversent les mêmes portes logiques.

13. Procédé selon l'une quelconque des revendications 8 à 10 ou 12,
**caractérisé en ce que**
le signal de départ (33) est tiré de la commande de la source lumineuse en tant que signal de départ électrique.
